# EUROPÄISCHE PATENTSCHRIFT

(11) **EP 0 726 389 B1**
(45) Veröffentlichungstag und Bekanntmachung des Hinweises auf die Patenterteilung: **22.04.1998**
(21) Anmeldenummer: 96101813.2
(22) Anmeldetag: 08.02.1996
(51) Int. Cl.: F02M 35/02, F02M 35/024, B01D 46/42, B01D 46/52

(54) **Gehäuse für Luftfilter einer Brennkraftmaschine**
Air filter housing for internal combustion engine
Carter d'un filtre à air pour moteur à combustion interne

(30) Priorität: 08.02.1995 DE 19504060
(43) Veröffentlichungstag der Anmeldung: 14.08.1996
(73) Patentinhaber: FILTERWERK MANN & HUMMEL GMBH, 71631 Ludwigsburg (DE)
(72) Erfinder: Butz, Thomas, D-70825 Korntal-Münchingen (DE); Kaller, Ralf, D-70806 Kornwestheim (DE); Kissel, Günther, D-70567 Stuttgart (DE); Koch, Volker, D-70193 Stuttgart (DE); Leipelt, Rudolf, D-71672 Marbach (DE); Mayer, Gerhard, D-74385 Pleidelsheim (DE); Schnabel, Werner, D-74747 Ravenstein (DE)
(74) Vertreter: Voth, Gerhard, Dipl.-Ing.

(56) Entgegenhaltungen:
- DE-A- 3 118 413
- DE-A- 3 336 882
- DE-A- 3 708 756
- FR-A- 2 239 392
- FR-A- 2 691 912

## Beschreibung

Die Erfindung betrifft ein Gehäuse insbesondere für ein Luftfilter für die Ansaugluft einer Brennkraftmaschine.

Bei der Anwendung von Luftfiltergehäusen muß eine gute Abdichtung der beiden Gehäuseteile gewährleistet sein, damit keine ungereinigte Luft in den Reinluftbereich einströmen kann. Aber auch bei anderen Anwendungen ist es zweckmäßig und vorteilhaft, ein Gehäuse möglichst luftdicht mit einem Deckel zu verschließen. Hierzu werden üblicherweise Dichtungen verwendet, die im Bereich der Kontaktfläche zwischen Deckel und Gehäuseschale angeordnet sind. Gerade bei Kunststoffgehäusen besteht die Gefahr, daß sich das Material beim Herstellen des Gehäuses verzieht, wobei die Toleranzen dabei unter Umständen Undichtigkeiten zwischen den beiden Gehäuseteilen hervorrufen können.

Die bisher bekannten Maßnahmen zur Vermeidung von Undichtigkeiten bestanden darin, daß die Teile im Dichtbereich verstärkt wurden, beispielsweise durch Materialanhäufungen oder durch Einsatz von Versteifungselementen die unter Umständen aus einem metallischen Material bestanden. Die Anwendung von Materialanhäufung führt jedoch dazu, daß gerade bei Kunststoff ein noch stärkerer Verzug eintritt. Die Verwendung von metallischen Versteifungselementen hat den Nachteil, daß ein Recycling des Kunststoffs nicht möglich ist bzw. in nicht unerheblichem Maße erschwert wird.

Der Erfindung liegt die Aufgabe zugrunde, ein Gehäuse zu schaffen, das die genannten Nachteile vermeidet und eine zuverlässige Abdichtung gewährleistet ist, sowie umweltfreundlich hergestellt und entsorgt werden kann.

Diese Aufgabe wird ausgehend von dem Oberbegriff des Hauptanspruchs durch dessen kennzeichnenden Merkmale gelöst.

Der Grundgedanke der Erfindung liegt darin, daß ein Teil oder beide Kunststoffteile mit wenigstens einem allseitig geschlossenen Kanal versehen werden, welcher die Festigkeit unter Einsatz geringster Materialmengen, sowie die maximale Biegespannung erhöht.

Gemäß einer Weiterbildung ist der Kanal im Gasinnendruckverfahren hergestellt. Bei diesem Verfahren kann in einem einzigen Spritzgießvorgang zunächst das Kunststoffmaterial in die Spritzgießform eingebracht und anschließend durch die Spritzgießdüse oder durch eine weitere Düse Luft in den zu bildenden Kanal eingeblasen werden, wodurch sich ein luftführender Kanal ausbildet. Durch die Zuführung von Luft unter hohem Druck ist ein Nachpressen des Kunststoffes, wie dies üblicherweise zur Verringerung von Schwindung geschieht, nicht mehr erforderlich.

Gemäß einer weiteren Ausgestaltung der Erfindung ist im Dichtbereich zwischen Gehäuseschale und Deckel eine umlaufende Dichtung vorgesehen. Dieser erhöht die Dichtwirkung und kann mit einem der beiden Gehäuseteile fest verbunden sein bzw. in einer entsprechend geformten Nut angeordnet sein.

Bei der Verwendung des Gehäuses für ein Luftfilter wird dieses Luftfilter abdichtend zwischen Gehäuse und Deckel angeordnet, so daß ein Rohluftbereich gebildet wird, dem die zu filternde Luft zugeführt wird, sowie ein Reinluftbereich, welcher unmittelbar mit dem Ansaugtrakt einer Brennkraftmaschine in Verbindung steht.

Zur Erhöhung der Stabilität des Gehäuses an anderen Bereichen können weitere Kanäle, welche im Gasinnendruckverfahren hergestellt werden oder auch Rippen, vorgesehen sein. Da die Herstellung der Kanäle in einem einzigen Arbeitsgang mit dem Spritzgießen erfolgt, ist dies eine Möglichkeit zur Stabilisierung von Kunststoffteilen.

Gemäß einer weiteren Ausgestaltung ist das Luftfilter aus einem zick-zack-förmig gefalteten Filterelement hergestellt. Dieses Filterelement befindet sich in einem Rahmen, der mit einer Dichtung versehen ist und zwischen Deckel und Gehäuseschale eingespannt ist.

Die Dichtung zwischen Gehäuseschale und Deckel ist in bevorzugter Weiterbildung eine Silikonschaumdichtung, die in eine umlaufende Rinne der Gehäuseschale eingebraucht wird. Das Filterelement, welches sich unmittelbar an die Wandung der Gehäuseschale anlegt, erstreckt sich bis in den Dichtungsbereich, das heißt, das Dichtmaterial überdeckt auch einen Teil des Randes des Filtermaterials und stellt somit gleichzeitig auch die Verbindung zu dem Filtermaterial des Filterelements her. Da Silikonschaum sich mit der thermoplastischen Gehäuseschale nicht verbindet, ist in der Rinne ein umlaufender Vorsprung vorgesehen, welche die Dichtung fixiert. Der wesentliche Vorteil dieses Dichtungsaufbaus liegt darin, daß das Filterelement nach dem Gebrauch aus der Gehäuseschale in einfacher Weise herausgenommen werden kann. Dabei muß allerdings der Widerstand des Vorsprungs überwunden werden.

Eine weitere Ausgestaltung der Erfindung sieht vor, die Befestigungspunkte zwischen Gehäuseschale und Deckel mit metallischen Einsätzen zu versehen. Dies hat den Vorteil, daß hier ein metallischer Anschlag gebildet wird, der eine Überbeanspruchung des Kunststoffs im Befestigungsbereich vermeidet. Der metallische Anschlag besteht im wesentlichen aus einer Metallbuchse im Deckel und einer Metallbuchse in der Gehäuseschale, welche an ihren zueinander gewandten Stirnseiten zur Anlage kommen.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Ausführungsbeispiele der Erfindung sind in den Zeichnungen dargestellt und werden im folgenden näher erläutert. Die Zeichnungen zeigen:
- Figur 1: die Detaildarstellung eines Gehäuses,
- Figur 2: eine Variante eines Gehäuses mit einem Filtereinsatz.

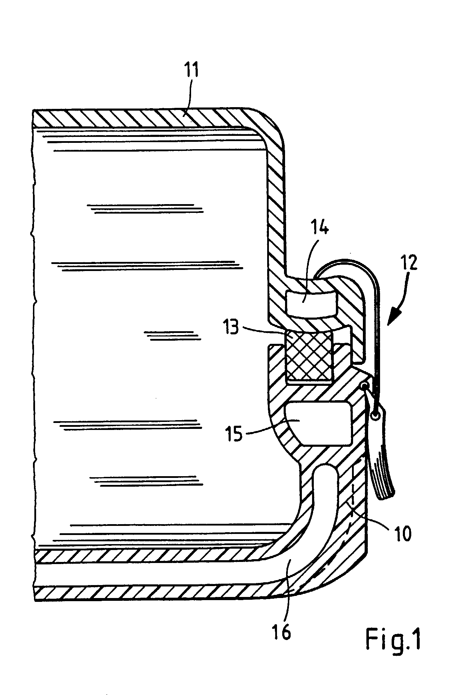

Die Darstellung gemäß Figur 1 zeigt eine Gehäuseschale 10, ein Gehäusedeckel 11, Verschlußelemente 12 sowie eine zwischen Gehäusedeckel 11 und Gehäuseschale 10 liegende Dichtung 13. Gehäuseschale 10 und Deckel 11 bestehen aus Kunststoff und sind im Spritzgießverfahren hergestellt. Sowohl in der Gehäuseschale 10 als auch im Deckel 11 befindet sich im Dichtbereich jeweil ein Kanal 14, 15. Die Kanäle sind im Gasinnendruckverfahren hergestellt und verlaufen längs des Dichtbereiches des quaderförmigen Gehäuses. In der Gehäuseschale 10 befindet sich ein weiterer Kanal 16. Auch dieser ist im Gasinnendruckverfahren hergestellt und dient zur zusätzlichen Versteifung der Gehäuseschale. Dies stellt hier lediglich eine Ausführungsvariante dar. Selbstverständlich sind jede andere Art von Kanälen denkbar. Die Kanäle sind dabei zweckmäßigerweise so anzuordnen, daß die gewünschte Steifigkeit bzw. Ebenheit erzielt wird.

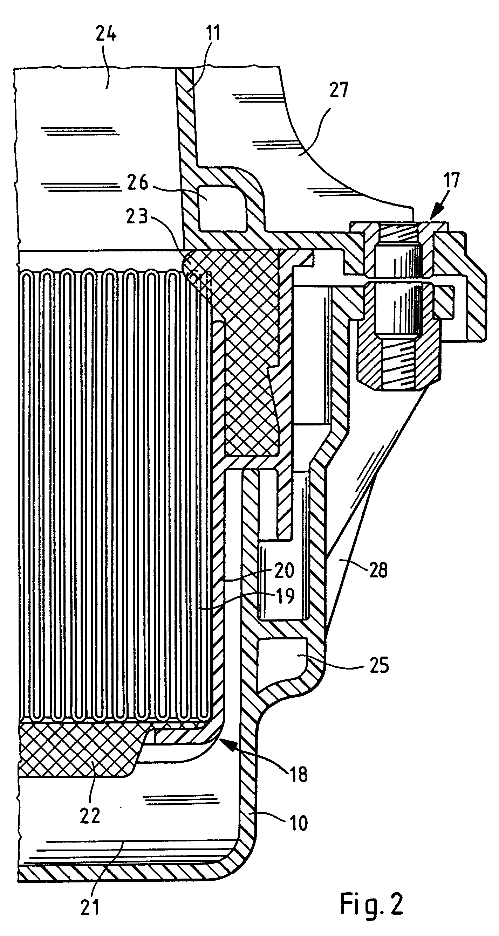

In Figur 2 ist in einer Variante ebenfalls eine Gehäuseschale 10 gezeigt. An dieser Gehäuseschale ist ein Deckel 11 über eine Schraubverbindung 17 befestigt. In dem Gehäuse befindet sich ein Luftfiltereinsatz 18. Dieser Luftfiltereinsatz besteht aus einem zick-zack-förmig gefalteten Filterelement 19, welches in einem Kunststoffrahmen 20 eingelegt ist. Auf der Rohluftseite 21 befindet sich an dem Luftfiltereinsatz ein Vlieselement 22 zur Vorabscheidung von Staubpartikeln oder ähnlichem. Das Filterelement ist über eine Dichtung 23 mit dem Rahmen 20 verbunden. Die Dichtung 23 dichtet gleichzeitig den Reinluftbereich 24 gegenüber der Umgebung ab. Auch hier ist die Gehäuseschale 10 mit einem Kanal 25 und der Deckel 11 mit einem Kanal 26 jeweils zur Versteifung des Dichtbereiches ausgestattet. Wie aus der Figur ersichtlich, erfolgt der Kontakt zwischen Gehäuseschale und Deckel 11 über den Kunststoffrahmen 20. Dieser Kunststoffrahmen 20 sorgt dafür, daß durch die Schraubverbindung 17 eine gewisse Vorspannung erzielt wird und erhalten bleibt. Wie weiter aus dieser Figur ersichtlich, sind im Verbindungsbereich zusätzlich Versteifungsrippen 27 am Deckel sowie Versteifungsrippen 28 an der Gehäuseschale angeordnet. Selbstverständlich können zur weiteren Verbesserung der Stabilität noch weitere Verstärkungsrippen und/oder im Gasinnendruckverfahren hergestellte Kanäle angeordnet sein.

## Patentansprüche

1. Gehäuse, insbesondere für ein Luftfilter für die Ansaugluft einer Brennkräftmäschine, aus Kunststoff bestehend aus einer Gehäuseschale und einem Deckel, wobei zwischen Gehäuseschale und Deckel ein umlaufender Dichtbereich vorgesehen ist zur Abdichtung des Gehäuses gegenüber der Umgebung und wobei Verschlußelemente im Dichtbereich angeordnet sind zum Befestigen des Deckels an der Gehäuseschale, dadurch gekennzeichnet, daß im Dichtbereich die Gehäuseschale (10) und/oder der Deckel (11) wenigstens ein, parallel zu der Kontaktfläche Gehäuseschale/Deckel verlaufender, allseitig geschlossener Kanal (14) vorgesehen ist.

2. Gehäuse nach Anspruch 1, dadurch gekennzeichnet, daß Gehäuseschale (10) und/oder Deckel (11) im Spritzgießverfahren hergestellt sind und der Kanal (14) im Gasinnendruckverfahren hergestellt ist.

3. Gehäuse nach einem der vorherigen Ansprüche, dadurch gekennzeichnet, daß im Dichtbereich zwischen Gehäuseschale (10) und Deckel (11) eine umlaufende Dichtung vorgesehen ist.

4. Gehäuse nach einem der vorherigen Ansprüche, dadurch gekennzeichnet, daß im Gehäuse (10) ein Luftfilter (19) vorgesehen ist, wobei das Luftfilter (19) einen Reinluftbereich von einem Rohluftbereich trennt und abdichtend zwischen Gehäuseschale (10) und Deckel (11) befestigt ist.

5. Gehäuse nach einem der vorherigen Ansprüche, dadurch gekennzeichnet, daß die Dichtung (23) sich in den Randbereich des Luftfilters erstreckt.

6. Gehäuse nach einem der vorherigen Ansprüche, dadurch gekennzeichnet, daß die Dichtung insbesondere eine Silikonschaumdichtung ist, welche in einen Dichtungskanal eingegossen ist.

7. Gehäuse nach Anspruch 6, dadurch gekennzeichnet, daß der Dichtungskanal einen umlaufenden Vorsprung zur Fixierung der Dichtung aufweist.

8. Gehäuse nach einem der vorherigen Ansprüche, dadurch gekennzeichnet, daß in der Gehäuseschale (10) und/oder im Deckel (11) weitere Kanäle (16) und/oder Rippen zur Stabilisierung vorgesehen sind.

9. Gehäuse nach Anspruch 4, dadurch gekennzeichnet, daß das Luftfilter (19) aus einem zick-zack-förmig geformten Filtermedium besteht, welches in einem Rahmen (20) angeordnet ist wobei der Rahmen einerseits an der Gehäuseschale (10) und andererseits an dem Deckel (11) anliegt und im Rahmen (20) eine Dichtung angeordnet ist, welche eine Abdichtung des Reinluftbereichs gegenüber der Umgebungsluft bewirkt.

10. Gehäuse nach einem der vorherigen Ansprüche, dadurch gekennzeichnet, daß punktuelle Befestigungsmittel entlang des Gehäuserandes vorgesehen sind, wobei diese mit metallischen Einsätzen versehen sind und einen Anschlag bilden.

## Claims

1. Housing, more especially for an air filter for the intake air of an internal combustion engine, which housing is formed from plastics material and comprises a housing shell and a cover, a circumferential sealing region being provided between housing shell and cover to seal the housing from the surroundings, and closure elements being disposed in the sealing region to secure the cover on the housing shell, characterised in that at least one duct (14), which extends parallel to the contact face between housing shell and cover and is closed on all sides, is provided in the sealing region between the housing shell (10) and/or the cover (11).

2. Housing according to claim 1, characterised in that housing shell (10) and/or cover (11) are/is produced by an injection moulding process, and the duct (14) is produced by a gas-filled internal pressure process.

3. Housing according to one of the preceding claims, characterised in that a circumferential seal is provided in the sealing region between housing shell (10) and cover (11).

4. Housing according to one of the preceding claims, characterised in that an air filter (19) is provided in the housing (10), the air filter (19) separating a filtered air region from an unfiltered air region and being sealingly secured between housing shell (10) and cover (11).

5. Housing according to one of the preceding claims, characterised in that the seal (23) extends into the edge region of the air filter.

6. Housing according to one of the preceding claims, characterised in that the seal is more especially a silicone foam seal which is integrally moulded in a sealing duct.

7. Housing according to claim 6, characterised in that the sealing duct has a circumferential projection member for the securement of the seal.

8. Housing according to one of the preceding claims, characterised in that additional ducts (16) and/or ribs are provided for stabilisation in the housing shell (10) and/or in the cover (11).

9. Housing according to claim 4, characterised in that the air filter (19) comprises a zigzag-shaped filter medium which is disposed in a frame (20), one side of the frame abutting against the housing shell (10) and the other side abutting against the cover (11), and a seal is disposed in the frame (20), which seal effects the sealing of the filtered air region from the ambient air.

10. Housing according to one of the preceding claims, characterised in that separate securing means are provided along the housing edge, said means being provided with metallic inserts and forming a stop member.

## Revendications

1. Boîtier, en particulier pour un filtre à air pour l'air comburant d'un moteur à combustion interne, boîtier en matière plastique consistant en une coquille de boîtier et un couvercle, une zone d'étanchéité, faisant tout le tour, étant prévue entre la coquille du boîtier et le couvercle pour assurer l'étanchéité du boîtier par rapport à l'environnement et des éléments de fermeture étant prévus dans la zone d'étanchéité pour fixer le couvercle sur la coquille du boîtier,
caractérisé en ce que
dans la zone d'étanchéité entre la coquille du boîtier (10) et/ou le couvercle (11) il est prévu au moins un canal (14), fermé de tous les côtés, qui s'étend parallèlement à la surface de contact entre la coquille du boîtier et le couvercle.

2. Boîtier selon la revendication 1,
caractérisé en ce que
la coquille du boîtier (10) et/ou le couvercle (11) sont fabriqués par le procédé de moulage par injection et le canal (14) est fabriqué par le procédé à pression interne de gaz.

3. Boîtier selon l'une des revendications précédentes,
caractérisé en ce que
dans la zone d'étanchéité on prévoit entre la coquille du boîtier (10) et le couvercle (11) un joint d'étanchéité qui fait tout le tour.

4. Boîtier selon l'une des revendications précédentes,
caractérisé en ce que
dans le boîtier (10) il est prévu un filtre à air (19), le filtre à air (19) séparant une zone d'air pur d'une zone d'air ordinaire et étant fixé en assurant l'étanchéité entre la coquille du boîtier (10) et le couvercle (11).

5. Boîtier selon l'une des revendications précédentes,
caractérisé en ce que
le joint d'étanchéité (23) s'étend dans la zone de bordure du filtre à air.

6. Boîtier selon l'une des revendications précédentes,
caractérisé en ce que
le joint d'étanchéité (23) est en particulier un joint d'étanchéité à mousse de silicone qui est coulé dans un canal de joint d'étanchéité.

7. Boîtier selon la revendication 6,
caractérisé en ce que
le canal du joint d'étanchéité présente une saillie, qui fait tout le tour, et qui sert à fixer le joint d'étanchéité.

8. Boîtier selon l'une des revendications précédentes,
caractérisé en ce que
dans la coquille du boîtier (10) et/ou dans le couvercle (11) il est prévu d'autres canaux (16) et/ou nervures, servant à la stabilisation.

9. Boîtier selon la revendication 4,
caractérisé en ce que
le filtre à air (19) consiste en un agent de filtration façonné en forme de zigzag, qui est disposé dans un cadre (20), le cadre reposant d'une part sur la coquille du boîtier (10) et d'autre part sur le couvercle (11) et dans le cadre (20) un joint d'étanchéité étant disposé, joint d'étanchéité qui assure une étanchéité de la zone d'air pur par rapport à l'air environnant.

10. Boîtier selon l'une des revendications précédentes,
caractérisé en ce que
des moyens de fixation ponctuels sont prévus le long du bord du boîtier, ces moyens étant pourvus d'inserts métalliques et forment une butée.
